# EUROPÄISCHE PATENTANMELDUNG

(11) **EP 1 167 934 A1**
(43) Veröffentlichungstag der Anmeldung: **02.01.2002**
(21) Anmeldenummer: 01112427.8
(22) Anmeldetag: 22.05.2001
(51) Int. Cl.: G01K 7/02

(54) **Mikromechanisches Bauelement, insbesondere Sensorelement, mit einer stabilisierten Membran und Verfahren zur Herstellung eines derartigen Bauelementes**

(30) Priorität: 21.06.2000 DE 10030352
(71) Anmelder: ROBERT BOSCH GMBH, 70442 Stuttgart (DE)
(72) Erfinder: Artmann, Hans, 71106 Magstadt (DE); Siegel, Robert, 79276 Reute (DE)

(57) **Zusammenfassung**

Es wird ein mikromechanisches Bauelement (5) und ein Verfahren zu dessen Herstellung vorgeschlagen, wobei das Bauelement (5) einen Tragkörper (10), insbesondere einen Siliziumkörper, und eine bereichsweise freitragende, mit dem Tragkörper (10) verbundene Membran (14) aufweist. Die Membran (14) ist weiter in einem freitragenden Bereich bereichsweise oberflächlich mit mindestens einem Stabilisierelement (12', 13) versehen. Das vorgeschlagene Verfahren weist folgende Verfahrensschritte auf: a.) Ausbildung eines ersten Bereiches (11) innerhalb des Tragkörpers (10), der zumindest einen ersten Oberflächenbereich des Tragkörpers (10) umfasst, b.) Ausbildung eines zweiten Oberflächenbereiches (12, 12', 13) des Tragkörpers (10), der zumindest bereichsweise in dem ersten Oberflächenbereich (11) liegt, c.) selektives Ätzen des ersten Bereiches (11) bis in eine einstellbare Tiefe unter Bildung von porösem Silizium, wobei der zweite Oberflächenbereich (12, 12', 13) zumindest nahezu nicht geätzt wird, d.) Abscheidung einer Membranschicht (14) auf der Oberfläche des Tragkörpers (10), wobei die Membranschicht (14) zumindest bereichsweise den ersten, porosierten Bereich (11) und zumindest bereichsweise den zweiten Oberflächenbereich (12, 12', 13) bedeckt, und e.) selektives Entfernen des porosierten ersten Bereiches (11).

## Beschreibung

Die Erfindung betrifft ein mikromechanisches Bauelement, insbesondere ein Sensorelement, mit einer stabilisierten, zumindest bereichsweise freitragenden Membran und ein Verfahren zur Herstellung eines derartigen Bauelementes nach der Gattung der unabhängigen Ansprüche.

### Stand der Technik

Kommerziell erhältliche mikromechanische Membransensoren auf Basis der Siliziumtechnik sind zumeist als Dünnschichtmembranen realisiert, wobei zunächst Schichtsysteme in Dicken zwischen einigen 10 Nanometern und einigen Mikrometern als Membranschicht abgeschieden und danach das darunter befindliche Trägersubstrat in den Bereichen entfernt wird, in denen die Membran freitragend sein soll. Derartige Membranen dienen dann vielfach zur thermischen Entkopplung der auf der Oberfläche der Membran angeordneten Sensorelemente von umgebenden, auf dem Trägersubstrat aus Silizium angeordneten Bauelementen.

Ein solcher thermischer Membransensor und ein Verfahren zu dessen Herstellung wird beispielsweise in DE 197 52 208 A1 vorgeschlagen, von der auch die vorliegende Erfindung ausgeht. Im Einzelnen wird darin zunächst eine dünne Schicht aus Siliziumcarbid, Siliziumoxid oder Siliziumnitrid über einem in der Oberfläche eines Siliziumsubstrates ausgebildeten Bereich aus porösem Silizium abgeschieden. Anschließend werden dann durch ein Trockenätzverfahren Öffnungen in dieser Siliziumcarbid- bzw. Siliziumnitridschicht gebildet, die bis zu der porösen Siliziumschicht reichen. Nachdem auf der Oberfläche der zu bildenden freitragenden Membran beispielsweise Leiterbahnstrukturen, Halbleiterbauelemente oder Thermoelemente angeordnet worden sind, wird schließlich die unter der zu erzeugenden freitragenden Membran befindliche Opferschicht aus porösem Silizium mit einem geeigneten Lösungsmittel wie Ammoniak, KOH oder TMAH entfernt. Somit entsteht unterhalb der Membranschicht ein Hohlraum, der die Sensormembran vom umgebenen Substrat thermisch entkoppelt.

Neben dem Verfahren gemäß DE 197 52 208 A1 zur Freilegung der Membran, d. h. dem Einsatz einer Opferschicht, die vor der Membranabscheidung auf der Vorderseite des Substrates erzeugt und die später von der Vorderseite des Substrates durch Löseöffnungen in der Membran wieder entfernt wird, ist weiterhin auch bekannt, die freizulegende Membran von der Rückseite des Substrates her freizulegen, indem das gesamte Substrat von der Rückseite aus geätzt wird bis auf der Vorderseite die gewünschte freitragende Membran entstanden ist. Die beiden vorgenannten, prinzipiell unterschiedlichen Verfahren werden einerseits der Oberflächenmikromechanik (OMM) und andererseits der Bulk-Mikromechanik zugeordnet.

Eine mögliche Opferschicht für einen oberflächenmikromechanischen Ätzprozess zur Erzeugung einer weitgehend freitragenden Membran ist, wie aus DE 197 52 208 A1 bekannt, poröses Silizium. Die Entstehung von porösem Silizium beruht dabei auf einer elektrochemischen Reaktion zwischen Flusssäure und Silizium, bei der das Silizium gegenüber dem Flusssäureelektrolyten anodisch gepolt ist, und bei der eine schwammartige Struktur in dem Silizium erzeugt wird. Durch die poröse Struktur weist das Silizium dann eine große innere Oberfläche und damit andere chemische Eigenschaften als das umgebende Silizium auf. Somit wird beispielsweise die Reaktivität von porösem Silizium gegenüber Bulk-Silizium deutlich gesteigert, wodurch ein selektives Lösen möglich wird.

Zur Herstellung von porösem Silizium eignen sich bekanntermaßen dotierte Siliziumsubstrate, wobei man üblicherweise p-dotierte Siliziumsubstrate mit unterschiedlichen Dotierungsgraden einsetzt. Durch den Dotierungsgrad läßt sich dabei die Strukturgröße innerhalb des entstehenden porösen Siliziums festgelegen, d. h. es kann sowohl nanoporöses Silizium entstehen, das Poren zwischen 1 nm und 5 nm aufweist, oder auch mesoporöses Silizium, bei dem aufgrund einer hohen p-Dotierung die Porengröße zwischen 5 nm und 50 nm liegt.

### Vorteile der Erfindung

Das erfindungsgemäße mikromechanische Bauelement und das erfindungsgemäße Verfahren zur Herstellung eines derartigen Bauelementes hat gegenüber dem Stand der Technik den Vorteil, dass durch das bereichsweise oberflächlich mit dem freitragenden Bereich der erzeugten Membran verbundene Stabilisierelement der Einfluss von Spannungen in der freitragenden Membran deutlich reduziert werden kann, so dass deren mechanische Stabilität insbesondere auch bei ansonsten unverändertem Membrandesign steigt. Weiter wird durch das Stabilisierelement auch die Entstehung und insbesondere die Ausbreitung von teilweise fertigungstechnisch bedingten Schäden wie Rissen, die vielfach von Ecken der Membran oder Löchern in der Membran ausgehen, vermieden. Durch das erfindungsgemäße Stabilisierelemnet steigt weiter die Widerstandsfähigkeit des hergestellten Bauelementes gegen Materialermüdung und gegenüber kurzzeitigen Überlastungen.

Darüber hinaus ist vorteilhaft, dass durch das erfindungsgemäße Verfahren die Stabilisierung von Membranen in mikromechanischen Bauelementen möglich ist, die sowohl in einem oberflächenmikromechanischen Herstellungsverfahren als auch in einem bulk-mikromechanischen Herstellungsverfahren erzeugt worden sind.

Weiter ist bei dem erfindungsgemäßen Verfahren vorteilhaft, dass die zu erzeugenden Stabilisierelemente insbesondere bei einem oberflächenmikromechanischen Herstellungsverfahren ohne zusätzliche Prozessschritte unter der freitragenden Membran erzeugt werden können, so dass eine Integration in bestehende Fertigungsanlagen ohne weiteres möglich ist. Andererseits ist es, sofern die zu erzeugende freitragende Membran keine Öffnungen bzw. Ätzlöcher aufweisen darf, ebenso in einfacher Weise möglich, die Opferschicht aus porösem Silizium unterhalb der freitragenden Membran in bekannter Weise durch rückseitiges Öffnen des Substrates bzw. Tragkörpers, d. h. in einem bulk-mikromechanischen Prozess, zu entfernen.

Vorteilhafte Weiterbildungen der Erfindung ergeben sich aus den in den Unteransprüchen genannten Maßnahmen.

So ist es vorteilhaft, wenn das oder die Stabilisierelemente derart ausgebildet sind, dass sie einer Verformung der freitragenden Membran, insbesondere einer Verwölbung, und einer damit vielfach einher gehenden Ausbildung von Spannungen in der Membran entgegenwirken.

Eine weitere vorteilhafte Ausgestaltung der Stabilisierelemente sieht vor, dass diese in Form von Stegen, insbesondere einer Mehrzahl von parallelen Stegen, oder in Form einer netzwerkartigen oder gitterartigen Anordnung von Stegen einseitig zwischen der freitragenden Membran und dem darunter befindlichen Tragkörper angeordnet, und unmittelbar stoffschlüssig mit der Membran verbunden sind. Weiterhin können die Stabilisierelemente auch die Form von ringförmigen Stegen oder Locheinfassungen aufweisen, die beispielsweise in der Membran erzeugte Ätzlöcher umgeben. Auf diese Weise wird eine Ausbreitung von von diesen Ätzlöchern vielfach ausgehenden Rissen in der Membran unterdrückt.

Als Materialien für die zu erzeugende freitragende Membran bzw. Membranschicht auf der Oberfläche des Tragkörpers aus Silizium eignen sich im Übrigen in bekannter Weise Siliziumnitrid, Siliziumoxid, Siliziumcarbid oder eine Kombination derselben, die als Schicht mit einer bevorzugten Dicke von 10 nm bis 10 µm, insbesondere 100 nm bis 1 µm, ausgebildet sind. Auf dieser zumindest bereichsweise bzw. weitgehend freitragenden Membran können dann im Weiteren vorteilhaft weitgehend beliebig vielfältige Schaltungsstrukturen, insbesondere Thermoelemente, sensitive Bauteile eines Sensorelementes sowie auch Leiterbahnen in bekannter Weise angeordnet werden.

Weiter ist auch vorteilhaft, dass die auf der Oberfläche des Tragkörpers zunächst abgeschiedene Membranschicht sowohl ganzflächig als auch in strukturierter Form vorliegen kann, so dass weitgehend beliebige Formen der später herausstrukturierten, weitgehend freitragenden Membranen herstellbar sind.

Dabei ist es weiter nicht zwingend, dass die erzeugten Membranen die vorzugsweise darunter befindlichen Stabilisierelemente vollständig abdecken, d. h. es ist durchaus möglich und in gewissen Anwendungsfällen auch vorteilhaft, wenn die erzeugten Stabilisierelemente bereichsweise von der Oberseite des Tragkörpers direkt zugänglich sind, d. h. nicht vollständig von der Membranschicht bedeckt sind. Auf diese Weise ist es beispielsweise möglich, mehrere, voneinander isolierte Membranen auf der Oberfläche des Tragkörpers zu erzeugen, die untereinander über Stabilisierelemente verbunden sind, und die gleichzeitig durch diese Stabilisierelemente mechanisch stabilisiert werden. Dazu befinden sich die Stabilisierelemente bevorzugt dann einerseits bereichsweise unterhalb der freitragenden Membran und sind andererseits bereichsweise oberflächlich frei zugänglich sind, d. h. nicht von einer Membranschicht bedeckt. Somit ist es nunmehr möglich, voneinander isolierte Membranschichten beispielsweise aus Siliziumoxid bzw. Siliziumnitrid zu erzeugen, die untereinander und/oder mit dem Tragkörper bevorzugt nur über Stabilisierelemente aus Silizium in Verbindung stehen.

Zur Herstellung der erfindungsgemäß eingesetzten Stabilisierelemente eignet sich besonders vorteilhaft n-dotiertes Silizium, da man sich in diesem Fall das unterschiedliche Ätzverhalten von p-dotiertem und n-dotiertem Silizium zu Nutze machen kann. So entsteht unter den Bedingungen, bei denen man in p-dotiertem Silizium poröses Silizium erzeugen kann, in n-dotiertem Silizium dieses poröse Silizium gerade nicht bzw. nur in vernachlässigbaren Umfang. Somit eignet sich zur Erzeugung der Stabilisierelemente unterhalb der freizulegenden Membran besonders eine dünne Schicht aus n-dotiertem Silizium an der Oberfläche eines ansonsten p-dotierten Bereiches in dem Tragkörper, der dann nachfolgend durch selektive Ätzung porosiert wird, so dass eine Ausnehmung bzw. eine Kaverne entsteht. Da bei dieser Entfernung des p-dotierten Bereiches die n-dotierten Bereiche in dem Tragkörper nicht angegriffen werden, bleiben diese Bereiche in Form der zu erzeugenden Stabilisierelemente stehen. Bei diesem Verfahren ist weiter vorteilhaft, dass die Dicke der zu erzeugenden Stabilisierelemente in einfacher Weise durch die Prozessparameter, d. h. die Dotierungsdosis, die Implantationsenergie oder ein nachträgliches Eintreiben der Dotierstoffe, eingestellt werden kann. Zudem ist die Entstehung von porösem Silizium ein quasi isotroper Prozess, so dass stets eine vollständige Unterätzung der Stabilisierelemente bzw. der n-dotierten Bereiche eintritt.

Durch die Möglichkeit der Einstellung der Dicke der zu erzeugenden Stabilisierelemente über die Dicke der n-dotierten Bereiche kann weiterhin in einfacher Weise auch die Stärke der Stabilisierung bzw. die mechanische Stabilität der Stabilisierelemente in einfacher Weise an die Anforderungen für das jeweilige mikromechanische Bauelement angepasst werden.

### Zeichnungen

Die Erfindung wird anhand der Zeichnungen und in der nachfolgenden Beschreibung näher erläutert. Die Figuren 1a bis 1c erläutern ein erstes Ausführungsbeispiel zur Herstellung eines mikromechanischen Bauelementes im Schnitt in verschiedenen Verfahrensschritten. Die Figur 2 erläutert ein zweites Ausführungsbeispiel für ein mikromechanisches Bauelement im Schnitt, wobei der Tragkörper von dessen Rückseite geöffnet wurde. Die Figuren 3a und 3b erläutern ein drittes Ausführungsbeispiel eines mikromechanischen Bauelementes in Draufsicht bzw. im Schnitt entlang der Schnittlinie III-III. Die Figuren 4 und 5 zeigen jeweils in Draufsicht ein weiteres Ausführungsbeispiel für ein mikromechanisches Bauelement, wobei auf der Oberfläche der erzeugten, stabilisierten, weitgehend freitragenden Membran zusätzliche Schaltungsstrukturen angeordnet sind. Die Figuren 6a und 6b erläutern schließlich ein sechstes Ausführungsbeispiel für ein mikromechanisches Bauelement in Draufsicht und im Schnitt entlang der Schnittlinie VI-VI.

### Ausführungsbeispiele

Die Erfindung geht von der Herstellung eines thermischen Membransensors gemäß DE 197 52 208 A1 sowie dem dort beschriebenen Herstellungsverfahren aus. Dieser bekannte Membransensor wird erfindungsgemäß mit einem Stabilisierelement zur mechanischen Stabilisierung der erzeugten, weitgehend freitragenden Membran versehen. Dazu wird gleichzeitig das aus DE 197 52 208 A1 bekannte Herstellungsverfahren modifiziert. Hinsichtlich bekannter Details der nachfolgenden Ausführungsbeispiele und insbesondere hinsichtlich Details zu einzelnen, bereits bekannten Verfahrensschritten sei somit zunächst auf DE 197 52 208 A1 verwiesen.

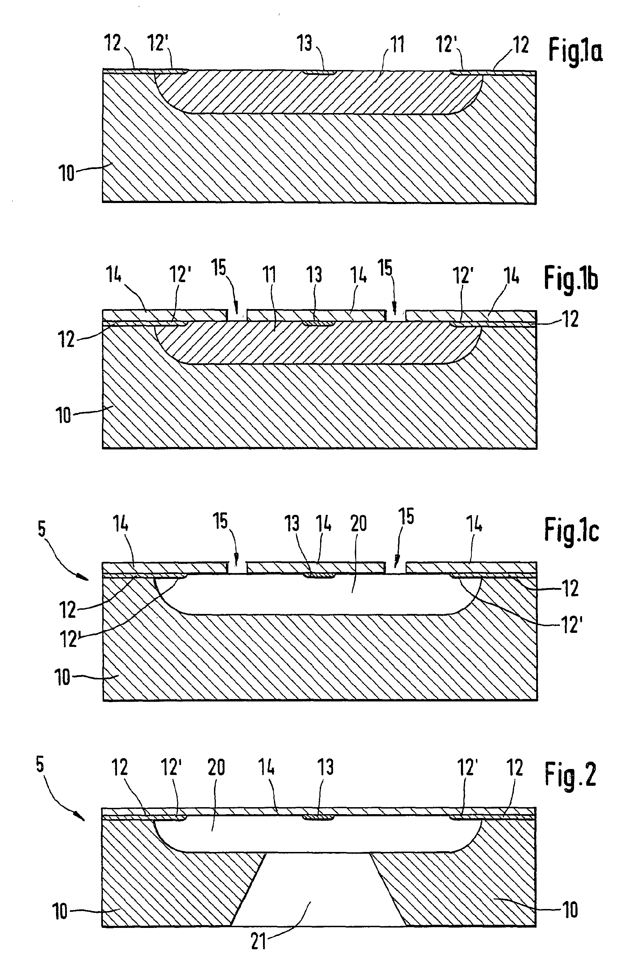

Das erste Ausführungsbeispiels wird mit Hilfe der Figuren 1a bis 1c erläutert. In Figur 1a ist zunächst ein Tragkörper 10 in Form eines Siliziumkörpers eines Siliziumwafers vorgegeben, der oberflächlich innerhalb eines ersten Bereiches 11 mit einer p-Dotierung versehen ist. Der erste Bereich 11 hat dabei die Form einer Wanne und umfasst insbesondere einen ersten Oberflächenbereich des Tragkörpers 10, der in Draufsicht eine zumindest näherungsweise rechteckige oder kreisförmige Fläche einnimmt. Die typischen Dimensionen des ersten Bereiches 11 liegen bei einer lateralen Ausdehnung von 1 mm x 1 mm bis 5 mm x 5 mm und einer typischen Tiefe von 1 µm bis über 100 µm.

An dieser Stelle sei betont, dass es ebenfalls möglich ist, dass der gesamte Tragkörper 10 bzw. die gesamte Oberfläche des Tragkörpers 10 aus p-dotiertem Silizium besteht, so dass sich der erste Bereich 11 hinsichtlich seiner Zusammensetzung von dem darunter befindlichen Tragkörper 10 zunächst nicht unterscheidet. In diesem Falle tritt die Unterscheidung des ersten Bereiches 11 hinsichtlich seiner Struktur von dem Tragkörper 10 erst bei der nachfolgend erläuterten Porosierung des ersten Bereiches 11, d. h. der Umwandlung des p-dotierten Siliziums in poröses Silizium, zu Tage.

In Figur 1a ist weiter dargestellt, wie auf der Oberfläche des Tragkörpers 10 ein zweiter Oberflächenbereich 12, 12', 13 ausgebildet wird, der zumindest bereichsweise innerhalb des ersten Oberflächenbereiches liegt. Dazu wird der zweite Oberflächenbereich 12, 12', 13 in Form einer Maskierungsschicht an der Oberfläche des Tragkörpers 10 ausgebildet, indem der Tragkörper 10 bzw. der erste Bereich 11 im Bereich des zweiten Oberflächenbereiches 12, 12', 13 in n-dotiertes Silizium überführt wird.

Diese Überführung in n-dotiertes Silizium kann dabei durch eine Umdotierung von zuvor p-dotiertem Silizium erfolgen, aus dem der Tragkörper 10 und/oder der erste Bereich 11 bestehen. Zur Umdotierung eignet sich beispielsweise in bekannter Weise eine Implantation von Phosphor oder Arsen und/oder eine bereichsweise Dotierung des Tragkörpers 10 bzw. des ersten Bereiches 11 beispielsweise mit POCl₃ (sogenanntes "Phosphorglas"). Die Dicke des zweiten Oberflächenbereiches 12, 12', 13 kann dabei in bekannter Weise durch die Prozessparameter bei der Implantationen bzw. der Dotierung, d. h. durch die Dotierungsdosis, die Implantationsenergie, oder durch ein nachträgliches Eintreiben der Dotierstoffe in definierter Weise eingestellt werden.

Die Dicke des zweiten Oberflächenbereiches 12, 12', 13 liegt typischerweise zwischen 10 nm und 3 µm, insbesondere 50 nm bis 1 µm.

Im erläuterten Ausführungsbeispiel gemäß Figur 1a ist der zweite Oberflächenbereich 12, 12', 13 in Form einer Zwischenschicht 12 sowie damit verbundenen Randstegen 12'und Stegen 13 ausgebildet. Die Stege 13 liegen dabei innerhalb des ersten Oberflächenbereiches des Tragkörpers 10 während die Randstege 12'sich am Rand dieses ersten Oberflächenbereiches befinden.

Nachdem nun der zweite Oberflächenbereich 12, 12', 13 in der erläuterten Weise in Form einer n-dotierten Maskierschicht auf der Oberfläche des Tragkörpers bzw. des ersten Bereiches 11 aufgebracht bzw. erzeugt worden ist, erfolgt anschließend mittels elektrochemischer Anodisierung in einem Flusssäureelektrolyten die selektive Überführung des ersten Bereiches 11 von p-dotiertem Silizium in poröses Silizium. Dabei wird über die Ätzparameter bei der elektrochemischen Anodisierung die Ausdehnung des ersten Bereiches 11 und insbesondere auch die Tiefe des ersten Bereiches 11 in an sich bekannter Weise eingestellt.

Bei dieser Porosierung des ersten Bereiches 11 macht man sich zu Nutze, dass der zweite Oberflächenbereich 12, 12', 13 infolge der n-Dotierung des dortigen Siliziums beim selektiven elektrochemischen Ätzen zumindest nahezu nicht angegriffen wird, und damit unverändert bleibt. Insofern entsteht das poröse Silizium lediglich in dem ersten Bereich 11 und nicht im zweiten Oberflächenbereich 12, 12', 13. Falls in Einzelfällen erforderlich, kann der zweite Oberflächenbereich 12, 12', 13 bei der Porosierung des ersten Bereiches 11 jedoch auch durch eine geeignete zusätzliche Maskierschicht, beispielsweise aus Si₃N₄, vor einem Ätzangriff geschützt werden. Weiter nutzt man bei dem elektrochemischen Ätzen auch die Tatsache aus, dass die Entstehung von porösem Silizium ein quasi isotroper Prozess ist, so dass die Maskierschicht in Form des zweiten Oberflächenbereiches 12, 12', 13 insbesondere im Bereich des Steges 13 bzw. der Randstege 12' vollständig unterätzt wird.

Die Figur 1b erläutert den nächsten Verfahrensschritt, bei dem auf der Oberfläche des Tragkörpers 10 eine Membranschicht 14 abgeschieden wird, die zumindest bereichsweise den ersten, bereits porosierten Bereich 11 und zumindest bereichsweise den zweiten Oberflächenbereich 12, 12', 13 bedeckt. Diese Membranschicht 14 ist beispielsweise eine Siliziumcarbidschicht, eine Siliziumoxidschicht, eine Siliziumnitridschicht oder eine Kombination aus SiO₂, Si₃N₄ und SiC mit einer typischen Dicke von 10 nm bis 10 µm, insbesondere 50 nm bis 500 nm. Die Membranschicht 14 wird dabei bevorzugt durch einen bekannten CVD-Prozess oder auch einen bekannten reaktiven Sputter-Prozess abgeschieden. Weiter ist es gemäß Figur 1b ohne Weiteres möglich, die Membranschicht 14 nicht auf der gesamten Oberfläche des Tragkörpers 10 abzuscheiden, sondern mit Hilfe einer geeigneten Maske lediglich bereichsweise.

Im Weiteren ist dann gemäß Figur 1b vorgesehen, dass die Membranschicht 14 lithographisch strukturiert und beispielsweise über ein Plasmatrockenätzverfahren bereichsweise geöffnet wird, wobei Ätzlöcher 15 in der Membranschicht 14 entstehen, die durch die Membranschicht 14 hindurch bis in den ersten Bereich 11 aus porösem Silizium hinein reichen.

Die Figur 1c erläutert den nächsten Verfahrensschritt zur Erzeugung eines mikromechanischen Bauelementes 5, indem, ausgehend von den Ätzlöchern 15, der erste Bereich 11 aus porösem Silizium mit Hilfe eines geeigneten Lösungsmittels wie beispielsweise Ammoniak oder einer verdünnten Kaliumhydroxidlösung herausgelöst wird. Dabei löst sich das poröse Silizium in dem ersten Bereich 11 zumindest nahezu vollständig auf, so dass eine Ausnehmung 20 in Form einer Kaverne entsteht.

Alternativ zu dem Herauslösen des porösen Siliziums mit einem Lösungsmittel kommt auch ein selektives Entfernen durch eine Oxidation des porösen Siliziums in dem porosierten ersten Bereich 11 und ein nachfolgendes Herauslösen des oxidierten porösen Siliziums mit Hilfe von Flusssäure in Frage. Diese Vorgehensweise hat den Vorteil, dass damit eine unerwünschte Blasenbildung beim Herauslösen des porösen Siliziums vermieden werden kann. Andererseits kommt es dabei jedoch teilweise zu Spannungen in dem porösem Silizium, was zu unerwünschten Verformungen führen kann.

Insgesamt ist nach dem Verfahrensschritt gemäß Figur 1c auf der Oberfläche des Tragkörpers 10 eine über der Ausnehmung 20 zumindest bereichsweise freitragende Membran 14 entstanden, die auf ihrer Unterseite, insbesondere in dem freitragenden Bereich, von dem Steg 13 bzw. den Randstegen 12' mechanisch stabilisiert wird. In Draufsicht weist die Membran 14 weiter Ätzlöcher 15 auf. Darüber hinaus befindet sich in den Bereichen des Tragkörpers 10, der oberflächlich nicht von der Ausnehmung 20 eingenommen wird, zwischen dem Tragkörper 10 und der Membranschicht 14 nun eine Zwischenschicht 12.

Es ist klar, dass das vorliegend erläuterte Ausführungsbeispiel hinsichtlich der Strukturierung des zweiten Oberflächenbereiches 12, 12', 13 keinerlei Beschränkungen unterliegt. Zur effektiven mechanischen Stabilisierung der Membran 14 ist weiter vor allem der Steg 13 entscheidend. Insofern kann auf die Randstege 12' bzw. auf die Zwischenschicht 12 auch verzichtet werden, indem man eine entsprechende Strukturierung des zweiten Oberflächenbereiches vornimmt.

Die Figur 2 erläutert ein zweites Ausführungsbeispiel zur Herstellung eines mikromechanischen Bauelementes 5, das sich von dem ersten Ausführungsbeispiel gemäß den Figuren 1a bis 1c lediglich dadurch unterscheidet, dass in der Membranschicht bzw. der weitgehend freitragenden Membran 14 keine Ätzlöcher 15 erzeugt worden sind, sondern statt dessen eine Öffnung 21 in dem Tragkörper 10 erzeugt wurde, die einen rückseitigen Zugang zu der Ausnehmung 20 erlaubt.

Im Einzelnen wurde dazu zunächst auf der der Membranschicht 14 abgewandten Seite der Oberfläche des Tragkörpers 10 in bekannter Weise die Öffnung 21 erzeugt, die bis in den ersten Bereich 11 aus porösem Silizium hinein ragt. Anschließend wurde dann von der Rückseite des Tragkörpers 10 über die Öffnung 21 das poröse Silizium in dem ersten Bereich 11 herausgelöst, so dass die Ausnehmung 20 entsteht. Auf diese Weise bleibt die Membran bzw. die Membranschicht 14 unbeschädigt, da keinerlei Öffnungen bzw. Ätzlöcher 15 erforderlich sind, um Zugang zu dem ersten Bereich 11 zu erhalten.

Im Übrigen sei betont, dass zur Verwendung des mikromechanischen Bauelementes 5 gemäß den beiden vorstehend erläuterten Ausführungsbeispielen beispielsweise als Sensorelement zusätzlich in bekannter Weise auf der Oberfläche der Membran 14 zusätzliche Schaltungsstrukturen, insbesondere Thermoelemente, Leiterbahnen oder allgemein weitere sensitive Bauteile angeordnet werden können.

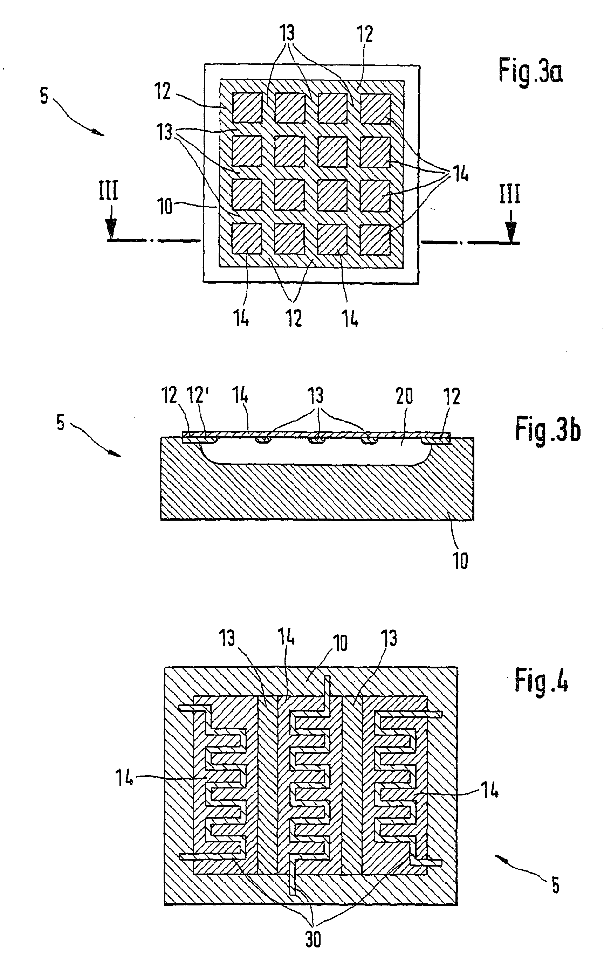

Die Figuren 3a und 3b erläutern ein drittes Ausführungsbeispiel für ein mikromechanisches Bauelement 5, wobei man gemäß Figur 3a zunächst von einem oberflächlich rechteckigen Tragkörper 10 aus p-dotiertem Silizium ausgeht. Weiter wird auf der Oberfläche des Tragkörpers 10, wie bereits erläutert, ein zweiter Oberflächenbereich 12, 12', 13 in Form von n-dotiertem Silizium erzeugt. Dazu wird das p-dotierte Silizium in diesem zweiten Oberflächenbereich 12, 12', 13 zu n-dotiertem Silizium umdotiert. Insgesamt bildet sich somit an der Oberfläche des Tragkörpers 10 eine Maskierschicht in Form des zweiten Oberflächenbereiches 12, 12', 13, die im erläuterten Beispiel gemäß Figur 3a schachbrettartig strukturiert ist, und eine rahmenförmig umlaufende Zwischenschicht 12, Randstege 12'und innerhalb des zweiten Oberflächenbereiches verlaufende Stege 13 aufweist.

Anschließend wird dann bereichsweise auf der Oberfläche des Tragkörpers 10 die Membranschicht 14 in bekannter Weise in Form einer Siliziumcarbidschicht oder einer Siliziumnitridschicht abgeschieden, und schließlich der erste Bereich 11, wie bereits aus Figur 1b bekannt, mittels einer elektrochemischen Anodisierung in einem Flusssäureelektrolyten in poröses Silizium überführt.

Danach erfolgt, wie bereits mit Hilfe der Figur 1c erläutert, über in der Membranschicht 14 erzeugte Ätzlöcher 15 ein selektives Entfernen des ersten Bereiches 11 aus porösem Silizium, wobei der zweite Oberflächenbereich 12, 12', 13 stehen bleibt. Dabei wird der zweite Oberflächenbereich 12, 12', 13, der nunmehr als Maskierschicht dient, in dem Bereich des ersten Bereiches 11 vollständig unterätzt.

Alternativ kann jedoch ebenso zunächst der erste Bereich 11 aus porösem Silizium erzeugt, wahlweise anschließend zumindest teilweise oxidiert, und danach darauf die Membranschicht 14 ganzflächig abgeschieden werden. Anschließend werden dann auf der Membranschicht 14 geeignete Sensorstrukturen oder Schaltungsstrukturen aufgebracht, bevor in nachfolgenden Prozessschritten die Membranschicht 14 über Ätzlöcher 15 geöffnet und das poröse Silizium oder das oxidierte poröse Silizium entfernt wird.

Insgesamt ist somit gemäß Figur 3b, in der die Ätzlöcher 15 und mögliche, auf der Oberfläche der Membranschicht 14 erzeugte oder später zu erzeugende Schaltungsstrukturen bzw. weitere Bauteile nicht dargestellt sind, eine zumindest weitgehend freitragende Membran 14 entstanden, die im Bereich der Zwischenschicht 12 auf dem als Rahmen dienenden Tragkörper 10 aufliegt, und die im Bereich der Randstege 12' umlaufend von diesen mechanisch stabilisiert wird. Weiter sind im freitragenden Bereich der Membran 14 nun gitterförmig bzw. schachbrettartig angeordnete Stege 13 ausgebildet, die die Membran 14 gleichmäßig mechanisch stabilisieren.

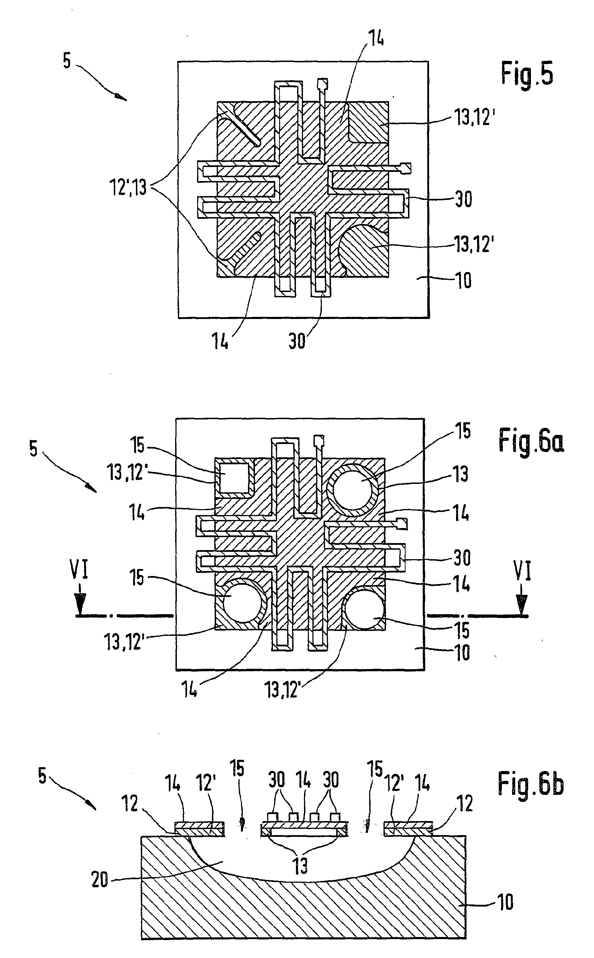

Insbesondere sei dabei betont, dass die Membranschicht 14 die Stege 13 und die Randstege 12', abgesehen von nicht dargestellten Löseöffnungen bzw. Ätzlöchern 15 zum Entfernen von porösem Silizium (siehe Figur 1c oder Figur 6b), vollständig bedeckt, d. h. diese sind in Figur 3a in Draufsicht eigentlich nicht sichtbar. Trotzdem wurden sie in Figur 3a zur besseren Erläuterung sichtbar gezeichnet, obwohl sie sich unterhalb der glatten, plattenförmigen Membran 14 befinden.

Die Figur 4 erläutert ein viertes Ausführungsbeispiel, das sich von dem Ausführungsbeispiel gemäß Figur 3a lediglich dadurch unterscheidet, dass die Stege 13 in Form von zwei parallel zueinander angeordneten Stegen als Stabilisierelement unter der Membran 14 angeordnet sind. Weiter wurde in Figur 4 auf die Randstege 12' bzw. die Zwischenschicht 12 verzichtet, indem der zweite Oberflächenbereich lediglich im Bereich der später entstehenden Stege 13 innerhalb des ersten Bereiches 11 ausgebildet wurde. Dieser Verzicht auf die Randstege 12' bzw. die Zwischenschicht 12 ist jedoch nicht zwingend. Auch in Figur 4 sind die Stege 13 in Draufsicht wieder sichtbar gezeichnet, obwohl sie sich eigentlich unterhalb der einstückigen, geschlossenen Membran 14 befinden. Die Stege 13 in Figur 4 dienen insbesondere auch der Unterdrückung einer Verwölbung der Membran 14. Weiter ist in Figur 4 dargestellt, wie auf der Oberfläche der Membran 14 insgesamt drei Schaltungsstrukturen angeordnet sind, die die Form von mäanderförmigen Widerstandsleiterbahnen aufweisen. Ein derartiger Aufbau eignet sich insbesondere für einen Strömungssensor.

Die Figur 5 erläutert als fünftes Ausführungsbeispiel eine weitere Ausführungsform eines mikromechanischen Bauelementes 5, das sich in Draufsicht von den Figuren 3a bzw. 4 lediglich durch die Form der aufgebrachten Schaltungsstruktur sowie der Form des zweiten Oberflächenbereiches 12, 12', 13 an der Oberfläche des Tragkörpers 10 unterscheidet.

Im Einzelnen ist in Figur 5 vorgesehen, dass der zweite Oberflächenbereich 12, 12', 13 in Form von Stabilisierflächen 13 in den Eckbereichen der Membran 14 angeordnet ist, wobei sich diese Stabilisierflächen 13 in den freitragenden Bereich unterhalb der Membran 14 erstrecken. Insofern bewirken die Stabilisierflächen 13 vor allem eine Stabilisierung der Membran 14 in deren Eckbereichen und verhindern dort die Ausbreitung von Rissen und Spannungen. Auch in Figur 5 befindet sich im Übrigen der zweite Oberflächenbereich bzw. die nach Ausbildung der Ausnehmung 20 daraus entstandenen Stege 13 bzw. Randstege 12' unterhalb der Membran 14.

In Figur 5 ist weiter zur Erläuterung angedeutet, dass die Stabilisierflächen 13 in weitgehend beliebigen, bevorzugt jedoch verrundete Kanten ausweisenden Formen ausgebildet sein können. Insbesondere eignen sich stegförmige, ringförmige, halbkreisförmige, rechteckige, netzwerkartige, gitterförmige, stabförmige oder zungenförmige Stabilisierflächen 13. Im Übrigen sei betont, dass auch in Figur 5 die Stabilisierflächen 13 und die Randstege 12' unterhalb der Membran 14 ausgebildet sind, d. h. die Membran 14 bedeckt diese vollständig. Unterhalb der Membran 14 befindet sich weiter, wie aus Figur 1c oder 3b bereits bekannt, auch die Ausnehmung 20.

Im Übrigen ist ohne Weiteres möglich, die Membranschicht 14 derart zu strukturieren, dass in Figur 5 in Draufsicht die Stabilisierflächen 13 bereichsweise direkt sichtbar sind, indem bereits beim Abscheiden der Membranschicht 14 eine geeignete Strukturierung der Membranschicht 14 vorgenommen worden ist. In diesem Fall bedeckt die Membranschicht 14 nicht alle n-dotierten Bereiche des ersten Oberflächenbereiches. In der Regel wird man die Membranschicht 14 jedoch zunächst ganzflächig abscheiden, und anschließend über Lithographieschritte strukturieren.

Die Figuren 6a und 6b erläutern schließlich ein sechstes Ausführungsbeispiel für ein mikromechanisches Bauelement 5 mit darauf aufgebrachten Schaltungsstrukturen 30, wobei in diesem Ausführungsbeispiel besonders die Einfassung von Löseöffnungen bzw. Ätzlöchern 15 mit Stegen 13 bzw. Randstegen 12' als Stabilisierelemente erläutert wird. Die Einfassung von Ätzlöchern 15 mit derartigen Stabilisierelementen hat den Vorteil, dass sich kleinste Fehlstellen oder Defekte an den Ätzlöchern 15 nicht durch in der Membran 14 vorhandene Spannungen fortpflanzen können.

Somit werden nunmehr auch eckige Ätzlöcher 15 möglich, da die ansonsten von den Ecken hervorgerufene Kerbwirkung von den die Ätzlöcher 15 umgebenden Stabilisierelementen abgefangen wird. Derartige eckige Ätzlöcher 15 haben den Vorteil, dass man diese je nach Anordnung der Schaltungsstrukturen bzw. sensitiven Bauteile auf der Oberfläche der Membran 14 größer gestalten kann.

Die Figur 6a ist eine Draufsicht auf ein mikromechanisches Bauteil 5, während die Figur 6b ein Schnitt durch Figur 6a entlang der eingezeichneten Schnittlinie ist. Insbesondere sei betont, dass auch in Figur 6a die Membran 14 die Stege 13 bzw. die Randstege 12' in Draufsicht stets bedeckt. Insofern sind in Figur 6a die Stege 13 bzw. die Randstege 12'lediglich zur besseren Erläuterung sichtbar gezeichnet.

Weiter ist in Figur 6a erläutert, wie unterschiedliche Positionen und Geometrien der Ätzlöcher 15 durch die diese umgebenden Stege 13 bzw. Randstege 12' mittels einer entsprechenden Strukturierung des zweiten Oberflächenbereiches stabilisiert werden können. Im Übrigen unterscheidet sich das Ausführungsbeispiel gemäß den Figuren 6a und 6b nicht von dem bereits mit Hilfe der Figuren 1a bis 1c erläuterten Ausführungsbeispiel.

## Patentansprüche

1. Mikromechanisches Bauelement, insbesondere Sensorelement, mit einem Tragkörper und mindestens einer zumindest bereichsweise freitragenden, mit dem Tragkörper verbundenen Membran, **dadurch gekennzeichnet, dass** die Membran (14) in einem freitragenden Bereich bereichsweise oberflächlich mit mindestens einem Stabilisierelement (12', 13) versehen ist.

2. Mikromechanisches Bauelement nach Anspruch 1, **dadurch gekennzeichnet, dass** das Stabilisierelement (12', 13) derart ausgebildet ist, dass es einer Verformung der Membran (14), insbesondere einer Verwölbung, oder einer Ausbreitung von Rissen oder Spannungen in der Membran (14) entgegenwirkt.

3. Mikromechanisches Bauelement nach Anspruch 1 oder 2, **dadurch gekennzeichnet, dass** das Stabilisierelement (12', 13) einen Steg, eine Mehrzahl von insbesondere parallelen Stegen, eine netzwerkartige oder gitterartige Anordnung von Stegen, einen ringförmig ausgebildeten Steg, eine Mehrzahl von insbesondere konzentrisch ausgebildeten ringförmigen Stegen oder eine insbesondere zungenförmig oder stabförmig ausgebildete Stabilisierfläche aufweist oder von diesen gebildet ist.

4. Mikromechanisches Bauelement nach mindestens einem der vorangehenden Ansprüche, **dadurch gekennzeichnet, dass** das Stabilisierelement (12', 13), eine insbesondere ringförmige Einfassung von Ausnehmungen oder Löchern, insbesondere Ätzlöchern (15), in der Membran (14) und/oder eine Stabilisierfläche in Eckbereichen der Membran (14) ist.

5. Mikromechanisches Bauelement nach mindestens einem der vorangehenden Ansprüche, **dadurch gekennzeichnet, dass** das Stabilisierelement (12', 13) einseitig insbesondere auf der dem Tragkörper (10) zugewandten Seite der Membran (14) angeordnet ist.

6. Mikromechanisches Bauelement nach mindestens einem der vorangehenden Ansprüche, **dadurch gekennzeichnet, dass** das Stabilisierelement (12', 13) zumindest bereichsweise in einem freitragenden Bereich der Membran (14) unmittelbar mit der Membran (14) in Kontakt und stoffschlüssig mit dieser verbunden ist.

7. Mikromechanisches Bauelement nach mindestens einem der vorangehenden Ansprüche, **dadurch gekennzeichnet, dass** die Membran (14) zumindest bereichsweise freitragend oberhalb einer in den Tragkörper (10) eingeätzten Ausnehmung (20) angeordnet ist, wobei das Stabilisierelement (12', 13) zwischen dem Tragkörper (10) und der Membran (14) angeordnet ist.

8. Mikromechanisches Bauelement nach mindestens einem der vorangehenden Ansprüche, **dadurch gekennzeichnet, dass** der Tragkörper (10) ein Siliziumkörper ist.

9. Mikromechanisches Bauelement nach mindestens einem der vorangehenden Ansprüche, **dadurch gekennzeichnet, dass** die Membran (14) aus einer Siliziumverbindung, insbesondere einer Siliziumnitridschicht, einer Siliziumcarbidschicht oder einer Siliziumoxidschicht, besteht, und eine Dicke von 10 nm bis 10 µm aufweist.

10. Mikromechanisches Bauelement nach mindestens einem der vorangehenden Ansprüche, **dadurch gekennzeichnet, dass** auf der Membran (14) eine Schaltungsstruktur (30), insbesondere mindestens ein Thermoelement, und/oder ein sensitives Bauteil eines Sensorelementes, angeordnet ist.

11. Mikromechanisches Bauelement nach mindestens einem der vorangehenden Ansprüche, **dadurch gekennzeichnet, dass** die Dicke der Stabilisierelemente (12', 13) zwischen 10 nm und 5 µm. liegt.

12. Verfahren zur Herstellung eines mikromechanischen Bauelementes mit einer zumindest bereichsweise freitragenden, stabilisierten Membran über einem Tragkörper aus Silizium, insbesondere eines mikromechanischen Bauelementes (5) nach mindestens einem der vorangehenden Ansprüche, mit folgenden Verfahrensschritten:
a.) Ausbildung eines ersten Bereiches (11) innerhalb des Tragkörpers (10), der zumindest einen ersten Oberflächenbereich des Tragkörpers (10) umfasst,
b.) Ausbildung eines zweiten Oberflächenbereiches (12, 12', 13) des Tragkörpers (10), der zumindest bereichsweise in dem ersten Oberflächenbereich (11) liegt,
c.) selektives Ätzen des ersten Bereiches (11) bis in eine einstellbare Tiefe unter Bildung von porösem Silizium, wobei der zweite Oberflächenbereich (12, 12', 13) zumindest nahezu nicht geätzt wird,
d.) Abscheidung einer Membranschicht (14) auf der Oberfläche des Tragkörpers (10), wobei die Membranschicht (14) zumindest bereichsweise den ersten, porosierten Bereich (11) und zumindest bereichsweise den zweiten Oberflächenbereich (12, 12', 13) bedeckt, und
e.) selektives Entfernen des porosierten ersten Bereiches (11).

13. Verfahren nach Anspruch 12, **dadurch gekennzeichnet, dass** bei dem selektiven Entfernen des porosierten ersten Bereiches (11) eine Ausnehmung (20) in dem Tragkörper (10) erzeugt wird, wobei sich aus der Membranschicht (14) eine zumindest bereichsweise freitragende Membran (14) über der Ausnehmung (20) bildet, die von den zweiten Oberflächenbereichen (12, 12', 13) mechanisch stabilisiert wird.

14. Verfahren nach Anspruch 12 oder 13, **dadurch gekennzeichnet, dass** als erster Bereich (11) ein p-dotierter Siliziumbereich in dem Tragkörper (10) erzeugt wird.

15. Verfahren nach Anspruch 12 oder 13, **dadurch gekennzeichnet, dass** als zweiter Oberflächenbereich (12, 12', 13), insbesondere durch Umdotierung des ersten Bereiches (11), ein n-dotierter Siliziumbereich in dem Tragkörper (10) erzeugt wird.

16. Verfahren nach Anspruch 15, **dadurch gekennzeichnet, dass** der n-dotierte Siliziumbereich durch bereichsweise Implantation von Phosphor oder Arsen und/oder bereichsweise Dotierung mit POCl₃ (Phosphorglas) des Tragkörpers (10) und/oder des ersten Bereiches (11) erfolgt.

17. Verfahren nach Anspruch 12, **dadurch gekennzeichnet, dass** das selektive Ätzen des ersten Bereiches (11) durch elektrochemische Anodisierung in einem Flusssäureelektrolyten erfolgt.

18. Verfahren nach Anspruch 12, **dadurch gekennzeichnet, dass** das selektive Entfernen des porosierten ersten Bereiches (11) mit Hilfe einer verdünnten Kaliumhydroxidlösung oder mit Hilfe einer Oxidation des porösen Siliziums in dem porosierten ersten Bereich (11) und einem nachfolgenden Herauslösen des oxidierten porösen Siliziums mit verdünnter Flusssäure erfolgt.

19. Verfahren nach mindestens einem der Ansprüche 12 bis 18, **dadurch gekennzeichnet, dass** die Ausbildung des zweiten Oberflächenbereiches (12, 12', 13) in Form einer bereichsweise einseitig mit der Membran (14) verbundenen Stabilisierungsfläche erfolgt, die insbesondere stegförmig, ringförmig, netzwerkartig, gitterförmig, stabförmig oder zungenförmig ausgebildet ist.

20. Verfahren nach mindestens einem der Ansprüche 12 bis 19, **dadurch gekennzeichnet, dass** die Ausbildung des ersten Bereiches (11) und/oder des zweiten Oberflächenbereiches (12, 12', 13) mit Hilfe einer Maskierung erfolgt.
